# EUROPEAN PATENT SPECIFICATION

(11) **EP 4 263 250 B1**
(45) Date of publication and mention of the grant of the patent: **29.01.2025**
(21) Application number: 21840021.6
(22) Date of filing: 20.12.2021
(51) Int. Cl.: B60G 7/00, B60G 7/02, B60G 9/00, B60G 11/27, B60G 11/46, F16F 1/30

(54) **TRAILING ARM ASSEMBLY**
LÄNGSLENKERBAUGRUPPE
ENSEMBLE DE BRAS LONGITUDINAL

(30) Priority: 21.12.2020 NL 2027187
(43) Date of publication of application: 25.10.2023
(73) Proprietor: VDL Weweler B.V., 7325 WC Apeldoorn (NL)
(72) Inventor: SCHRIER, Tom, 7323 RL APELDOORN (NL)
(74) Representative: EP&C
(86) International application number: PCT/EP2021/086743
(87) International publication number: WO 2022/136242

(56) References cited:
- EP-A1- 1 140 529
- WO-A1-2011/119020
- US-A- 3 802 718
- US-B2- 7 077 413

## Description

The invention relates to a trailing arm assembly for an air sprung wheel axle suspension, comprising:
- a trailing arm having a front end portion adapted to be pivotally arranged in a bearing bracket of a vehicle chassis, an attachment portion adapted to attach an axle body to the trailing arm, and a spring portion between the front end portion and the attachment portion,
- an axle pad adapted to be arranged between the attachment portion of the trailing arm and the axle body, the axle pad defining an axle seat to receive a longitudinal portion of the axle body,
- clamping means adapted to engage the axle body and to engage the trailing arm so as to clamp the axle body, the axle pad and the attachment portion of the trailing arm together,
- an air spring support arm for attaching an air spring, which air spring is located between the support arm and the chassis,

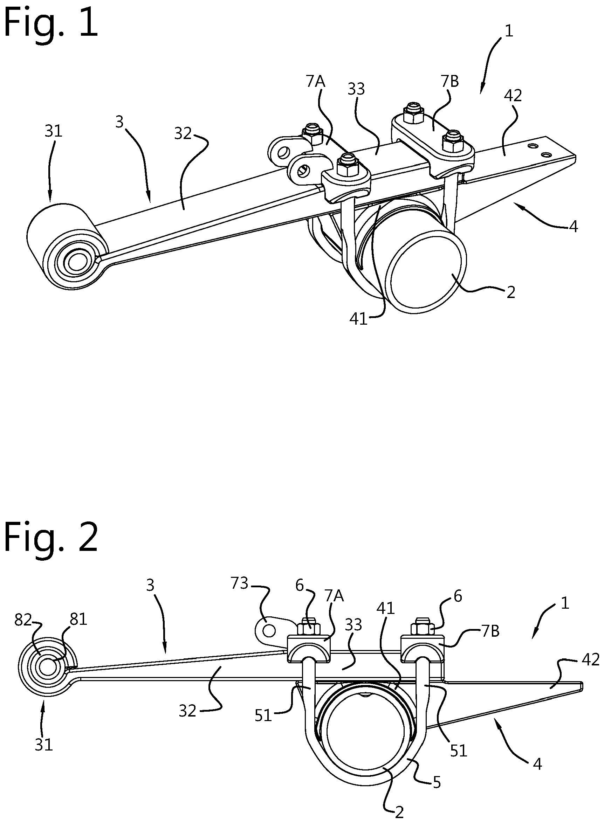

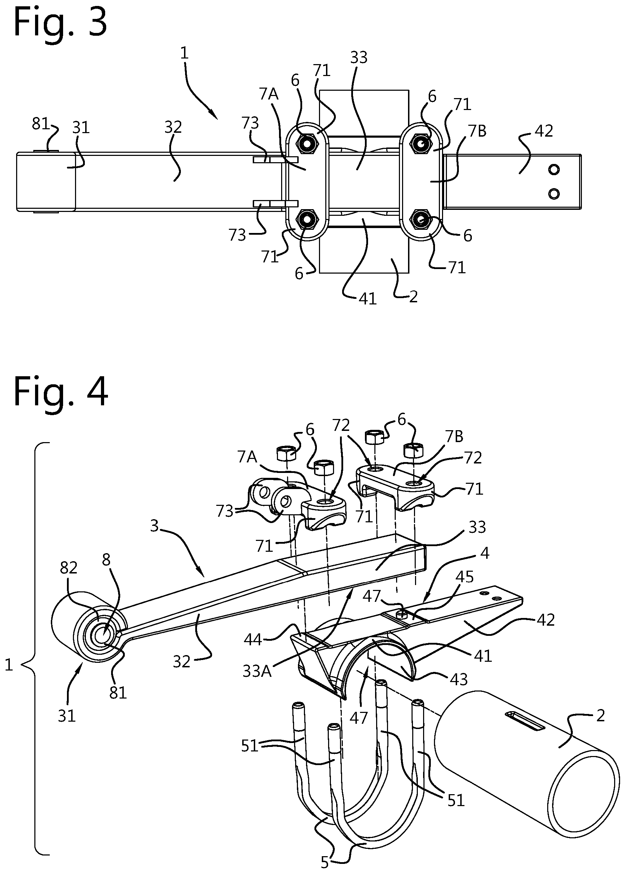

US 7077413 shows in Fig. 2 a trailing arm assembly in which the trailing arm has an integrally formed air spring supporting arm which is monolithical with the attachment portion of the trailing arm and extends rearwardly therefrom via a double curved substantially crank-shaped arm portion. In Fig. 3 of US 7077413 an embodiment is shown in which a clamping plate ("squeeze plate"), comprising an axle seat, is positioned opposite the axle pad. U-bolts squeeze the axle body between the axle pad and the clamping plate. An air spring supporting arm is integrally connected to the clamping plate. In Fig. 4 of US 7077413 is shown an embodiment wherein the axle pad is located on an upper side of the attachment portion of the trailing arm, and wherein a squeeze plate is located on an underside of the attachment portion. An air spring supporting arm is integrally connected to this squeeze plate. The embodiments of Figs. 3 and 4 are horizontally seen more compact than the embodiment of Fig. 2.

US 3802718 discloses a trailing arm assembly wherein an axle pad is located on an upper side of an attachment portion of the trailing arm, and wherein a portion of an air spring supporting arm is located on an underside of the attachment portion of the trailing arm.

It is an object of the invention to provide an alternative trailing arm assembly.

This object is achieved by a trailing arm assembly according to the preamble of claim 1, wherein the axle pad and the air spring supporting arm form an integral rear arm part.

The axle pad and the air spring supporting arm thus constitute an integral rear arm part, whilst the trailing arm constitutes a front arm part of the trailing arm assembly.

An advantage of the trailing arm assembly according to the invention is that the trailing arm itself, i.e. the front arm part, can be a more or less universal product suitable for a whole range of different wheel axle suspensions, whereas the axle pad providing the axle seat for a particular axle body and the air spring support arm (the rear arm part) can be a customized part for a specific vehicle suspension. The trailing arm is, from a manufacturing point of view, the most critical part of the trailing arm assembly. It must be able to absorb the major part of the dynamic loads during normal operation of the vehicle. The spring portion of the trailing arm is designed to be deformed and absorb the loads due to for example roll motions of the vehicle. The manufacturing of the trailing arm requires a manufacturing method performed by a specialized production facility. The trailing arm may be formed by a forging process or a rolling process. The rear arm part can be made of a different material by another manufacturing process and in different forms and sizes adapted to different vehicles.

Preferably, the integral rear arm part, constituted by the axle pad and the air spring supporting arm, is formed in one piece. A possible manufacturing method for the integral part may be forging in which a suitable steel blank is forged in preferably one stroke of the forging tool in the rear arm shape. Another method may be casting.

In another embodiment according to the invention, the axle pad and the air spring support arm are separately formed parts joined together by a permanent joint. In a practical embodiment this permanent joint between the axle pad and the air spring support arm may be formed by welding. In another embodiment, the permanent joint may be formed by riveting the axle pad and the air spring support arm together.

In yet another embodiment the axle pad and the air spring support arm are separately formed parts joined together by one or more mechanical fasteners such as bolts or screws. In this way, a non-permanent joint is formed between the axle pad and the air spring support arm.

The axle pad and the air spring support arm can be formed separately by the same or different forming processes, such as forging or casting. The air spring support arm may even be rolled or formed of metal sheet material. Forming them separately may provide more design freedom, than forming them in one piece.

In all the possible embodiments as described above, i.e. a one-piece rear arm part or a rear arm part made of a joined axle pad and air spring support arm, the axle pad and the air spring support arm constitute an integral rear arm part, which is handled as an integral part during mounting of the trailing arm assembly on the axle body.

As mentioned above the trailing arm may be a forged part. A spring steel blank is used to forge the trailing arm, preferably in one stroke of the forging tool. The trailing arm of the trailing arm assembly according to the invention may have a relatively short longitudinal length, which makes it easier to forge it with less force and less wear of forging tools and equipment.

Another option is that the trailing arm is at least partially a rolled part. In particular the elongate spring portion may be rolled to obtain the required spring characteristic. Other trailing arm portions such as the front end portion and the attachment portion may be initially rolled and then formed by an additional forming method. The front end may for example be bent into an eyelet. The attachment portion may for example be provided with bores for the bolt shanks by pressing them into the attachment portion.

In a possible embodiment the attachment portion of the trailing arm and the axle pad have interlocking means so as to interlock the trailing arm and the axle pad in a plane defined by a longitudinal direction and a transverse direction of the trailing arm. The interlocking means function as a positioning means to define the position of the trailing arm and the axle pad relative to each other. Furthermore, the interlocking means warrant that the axle pad maintains its position relative to the trailing arm when the trailing arm assembly is mounted to an axle body.

In a practical embodiment the clamping means comprise tensioning bolts, preferably U-bolts. The U-bolts extend around the axle body and the shanks of the U-bolt are tensioned with respect to the trailing arm.

The tensioning means may furthermore comprise at least one strap plate which engages the attachment portion of the trailing arm at a side opposite the axle pad, and which has bores for passing through bolt shanks of the tensioning bolts.

Alternatively or in addition, the attachment portion of the trailing arm may have a pair of ears, each ear extending laterally from the trailing arm and having a bore for passing through a bolt shank of the tensioning bolt.

In a possible embodiment the assembly has one strap plate and one pair of ears. In another possible embodiment the trailing arm is provided with two pair of ears. In yet another possible embodiment the assembly comprises two strap plates.

The invention also relates to an air sprung wheel axle suspension for a heavy vehicle such as a truck, a trailer or a semi-trailer, comprising a pair of trailing arm assemblies as described in the above, and furthermore comprising a pair of bearing brackets attached to the vehicle chassis, and an air spring supporting the vehicle chassis at a distance rearward from the bearing bracket, wherein the front end portion of the trailing arm is pivotally attached to the bearing bracket and wherein the air spring support arm is attached to a lower end of the air spring.

The invention also relates to a vehicle comprising such an air spring wheel axle suspension.

The invention will be further elucidated in the following description with reference to the drawing, in which:
Fig. 1 shows a view in perspective of an embodiment of a trailing arm assembly according to the invention,
Fig. 2 shows a side elevational view of the trailing arm assembly of Fig. 1,
Fig. 3 shows a top elevational view of the trailing arm assembly of Fig. 1,
Fig. 4 shows an exploded view of the trailing arm assembly of Fig. 1,
Fig. 5 shows in a view in perspective an air sprung wheel axle suspension including the trailing arm assembly of Fig. 1,
Fig. 6 shows a side elevational view of the air sprung wheel axle suspension of Fig. 5,
Fig. 7 shows a view in perspective of another embodiment of a trailing arm assembly according to the invention,
Fig. 8 shows a view in perspective of yet another embodiment of a trailing arm assembly according to the invention,
Fig. 9 shows a view in perspective of still another embodiment of a trailing arm assembly according to the invention,
Fig. 10 shows a side elevational view of trailing arm assembly of Fig. 9,
Fig. 11 shows a top elevational view of the trailing arm assembly of Fig. 9,
Fig. 12 shows an exploded view of the trailing arm assembly of Fig. 9,
Fig. 13 shows another view in perspective of the trailing arm assembly of Fig. 9,
Fig. 14 shows a view in perspective of a trailing arm for the trailing arm assembly of Fig. 9,
Fig. 15 shows a longitudinal cross section of the trailing arm assembly of Fig. 9,
Fig. 16 shows a view in perspective of an air sprung wheel axle suspension including the trailing arm assembly of Fig. 9,
Fig. 17 shows a side elevational view of the air sprung wheel axle suspension of Fig. 16,
Fig. 18 shows a side elevational view of an embodiment of a trailing arm assembly according to the invention of the so-called "underslung" type,
Fig. 19 shows a view in perspective of the trailing arm assembly of Fig. 18,
Fig. 20 shows a side elevational view of another embodiment of a trailing arm assembly according to the invention, and
Fig. 21 shows a longitudinal cross section of yet another embodiment of a trailing arm assembly according to the invention.
Figs. 1-4 show a trailing arm assembly 1. The trailing arm assembly 1 is attached to an axle body 2, in this case a tubular axle body 2 having a circular cross section. The attachment of the trailing arm assembly 1 to the axle body 2 takes place by a clamping arrangement.

As can be best seen in Fig. 4, the trailing arm assembly 1 comprises a trailing arm 3, a rear arm part 4, U-bolts 5 with corresponding nuts 6, and strap plates 7A and 7B.

The trailing arm 3 has a front end portion 31, an elongate spring portion 32 and an attachment portion 33. The trailing arm 3 in this embodiment is a rolled part made in one piece of a spring steel blank, which has been given at least a thickness profile by means of a rolling process.

The front end portion 31 may be rolled initially and thereafter bent into an eyelet. In the eyelet 31 a bearing bushing 8 is arranged, also referred to as a "silentblock". The bearing bushing 8 comprises an inner metal bushing 81 and a rubber lining 82 on the outside of the inner metal bushing 81. The rubber lining 82 engages the inner surface of the eyelet 31. The rubber lining 82 has a pretension when it is arranged in the eyelet 31. Some silentblocks, which may be used in the trailing arm assembly, also have an outer metal bushing, wherein the rubber layer is located between the inner and outer metal bushing.

The spring portion 32 is provided with a suitable thickness taper, which may be a parabolic taper, so as to obtain the suitable spring characteristics. The spring portion 32 is thus essentially a rolled leaf spring.

It is noted that in this embodiment the width of the spring arm portion 32 is essentially constant and that the thickness has a taper. However, also other shapes are possible, for example a spring arm portion having a combination of a width taper and a thickness taper. The width and thickness tapers may be parabolic or linear.

The attachment portion 32 of the trailing arm 3 has a substantially constant thickness and constant width.

The rear arm part 4 comprises an axle pad 41 and an air spring support arm 42 integral with the axle pad 41. The axle pad 41 comprises a semi-cylindrical shell 43 that defines an axle seat 47 to receive a longitudinal section of the axle body 2. Furthermore, the axle pad 41 has engagement surfaces 44, 45 facing away from the axle seat 47 to engage a bottom surface 33A of the attachment portion 33 of the trailing arm 3. On the engagement surface 45 a positioning protrusion 46 is formed, which is to be received in a positioning recess (not visible) in the bottom side 33A of the attachment portion 33 of the trailing arm 3. The positioning protrusion 46 provides a well-defined positioning of the axle pad 41 with respect to the trailing arm 3, but it also results in that the axle pad and the trailing arm 3 interlock in the longitudinal and transversal direction of the trailing arm 3.

An option to fix the axle pad and block mutual rotation of the axle body and the axle pad is to weld the axle pad on the axle body.

The rear arm part if formed in one piece. The air spring support arm 42 is monolithical with the axle pad 41. The rear arm part 4 may be formed by forging or casting.

The U-shaped bolts 5 extend around the axle body 2 and the shanks 51 of the U-shaped bolts 5 extend along lateral sides of the attachment portion 33 of the trailing arm 3.

The strap plates 7A, 7B extend in a width direction over a top side of the attachment portion 33 of the trailing arm 3. The strap plates 7A, 7B have end portions 71 that extend beyond the lateral sides of the attachment portion 33 of the trailing arm. The end portions 71 have a bore 72 through which one of the shanks 51 of the corresponding U-bolt 5 is passed. The strap plates 7A, 7B have an upper surface that serves as a counter surface for the respective nuts 6, which are cooperating with the threaded portion of the respective shanks 51.

The trailing arm assembly 1 can be attached to the axle body 2 by arranging the axle pad 41 with the engagement surfaces 44, 45 against the bottom side 33A of the attachment portion 33 of the trailing arm 3 and by positioning the axle body 2 in the axle seat 47 provided by the axle pad 41. The U-bolts 5 are arranged around the axle body 2 and the shanks 51 of each of the U-bolts 5 extend along one of the lateral sides of the attachment portion 33 of the trailing arm 3. The strap plates 7A, 7B are arranged on the top side of the attachment portion 33 of the trailing arm 3. The shanks 51 extend through the bores 72 in the strap plate 7A, 7B and the nuts 6 are screwed on the shanks 51. By tightening the nuts 6 the shanks 51 are tensioned, whereby the attachment portion 33 of the trailing arm 3, the axle pad 41 and the axle body 2 are clamped together to form a rigid unit. In this embodiment, the clamping means of the trailing arm assembly are thus constituted by the U-bolts 5, the corresponding nuts 6 and the strap plates 7A, 7B.

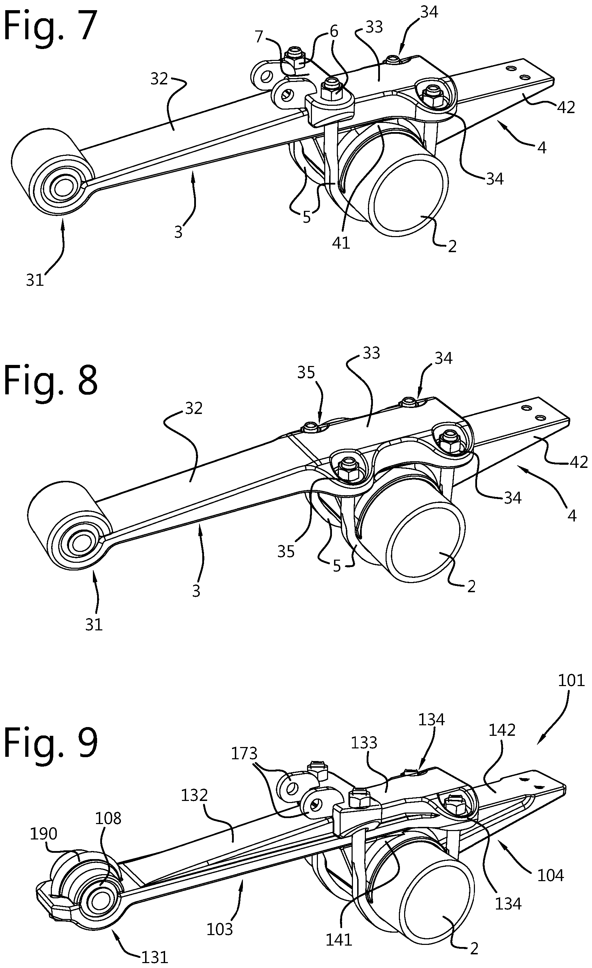

In the embodiment of Figs. 1-4, the strap plates 7A and 7B are two separate strap plates. It is however also conceivable that the strap plates are formed as one unit, which is as such known in the art. It is also possible that only one strap plate 7 is used and that at the attachment portion of the trailing arm 3 a pair of ears 34 with a bore for the shanks of the U-bolts is formed as is shown in the embodiment of Fig. 7. It is also conceivable that the attachment portion of the trailing arm has two pairs of ears 34, 35 having a bore formed on it as is shown in the embodiment of Fig. 8, in which embodiment the strap plates can be omitted.

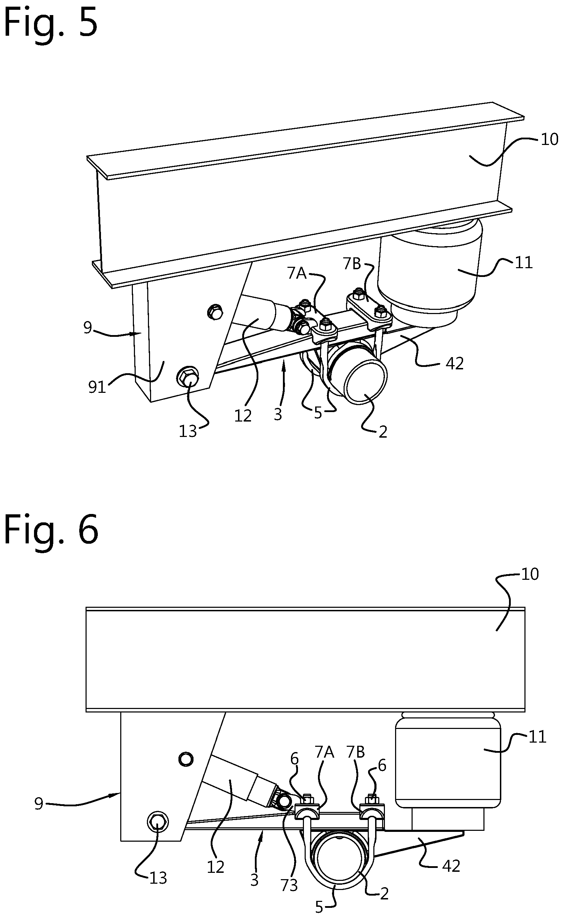

The trailing arm assembly 1, which is attached to the axle body 2, can be mounted to a vehicle chassis as is shown in Figs. 5 and 6 to form an air sprung wheel axle suspension of the vehicle. The vehicle may typically be a semi-trailer, a trailer or a truck. As the skilled person will understand there are two suspension units as shown in Figs. 5 and 6 attached to each axle body 2, one at each lateral side of the chassis.

The air-sprung wheel axle suspension thus has a bearing bracket 9 on either lateral side of the vehicle chassis, which bearing bracket 9 is attached to an overhead chassis beam 10. The front end portion 31 of the trailing arm 3 is arranged between lateral plates 91 of the bearing bracket 9 such that the ends of the metal bushing 81 engage the inner side of the lateral plates 91. A pivot bolt 13 is inserted through a bore in the lateral plates 91 and through the bushing 81 in the eyelet 31 of the trailing arm 3. By tightening the pivot bolt 13 by means of a corresponding nut (not shown), a pivoting connection between the bearing bracket 9 and the front end portion 31 of the trailing arm 3 is established.

An air spring 11 is positioned between the chassis and the trailing arm assembly 1. The air spring 11 has a lower end, which is attached to the air spring support arm 42. An upper end of the air spring 11 supports the chassis, wherein the upper end of the air spring 11 may be attached to the chassis beam 10.

In the embodiment shown in Figs. 5 and 6 the suspension furthermore comprises a shock absorber 12 which is pivotally connected to the bearing bracket 9 and with an opposite end pivotally connected to the front strap plate 7A, which strap plate 7A has two mounting ears 73 for connecting the shock absorber 12 to.

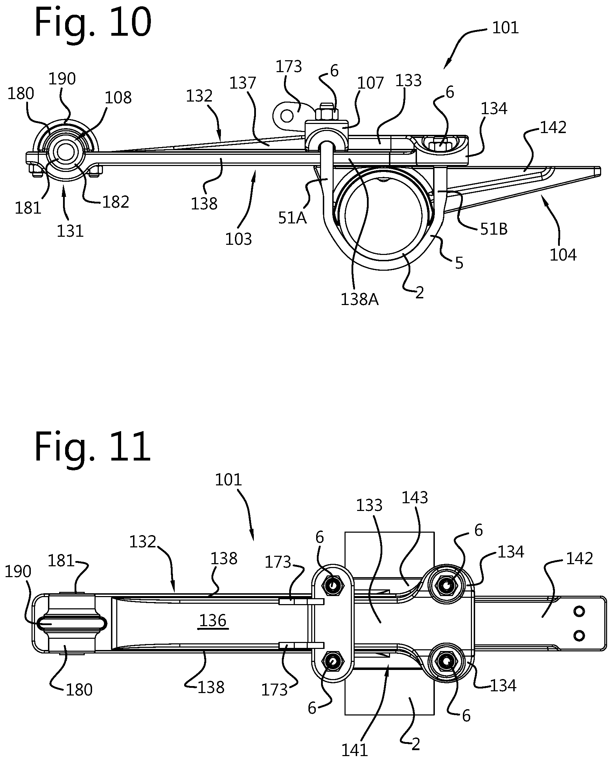

With reference to the Figs. 9-17, another embodiment of a trailing arm assembly according to the invention is described.

Figs. 9-13 show a trailing arm assembly 101. The trailing arm assembly 101 is attached to an axle body 2, in this case a tubular axle body 2 having a circular cross section. The attachment of the trailing arm assembly 101 to the axle body 2 takes place by a clamping arrangement.

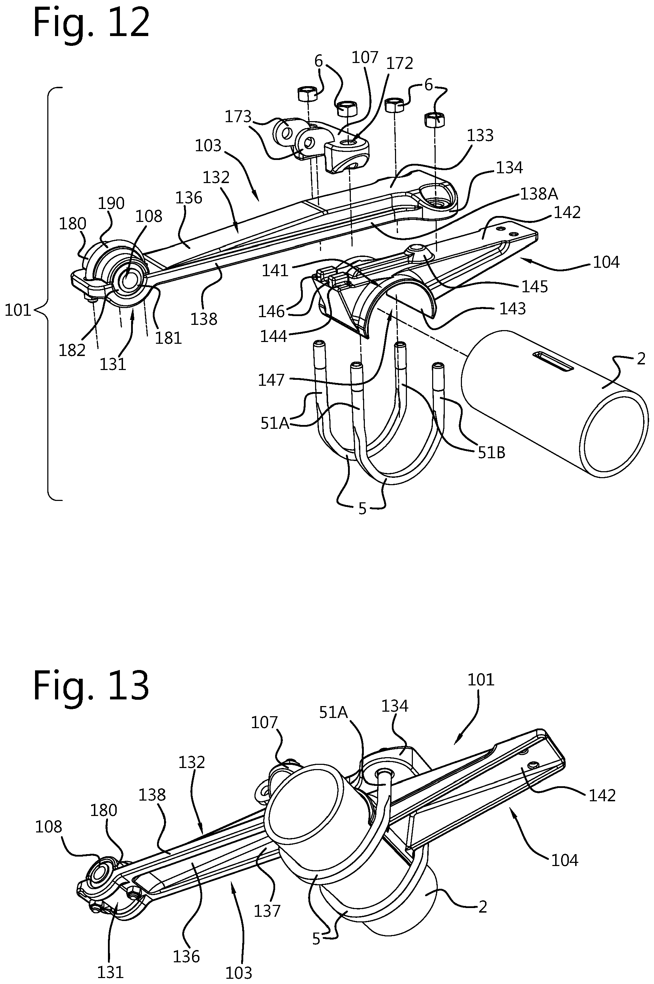

As can be best seen in Fig. 12, the trailing arm assembly 101 comprises a trailing arm 103, a rear arm part 104, U-bolts 5 with corresponding nuts 6, and a strap plate 107.

The trailing arm 103 has a front end portion 131, an elongate spring portion 132 and an attachment portion 133. The trailing arm 103 in this embodiment is a forged part made in one piece of a spring steel blank.

The front end portion 131 of the trailing arm 103 comprises a half eyelet, which can form an eyelet with an opposite separate eyelet part 180 clamped on the front end part 131 of the trailing arm 103 by means of a U-bolt 190. A bearing bushing 108 (a silentblock) having an inner metal bushing 181 and an outer rubber layer 182 is clamped on the front end part 131 of the trailing arm 103 by means of a U-bolt 190 and the separate eyelet part 180.

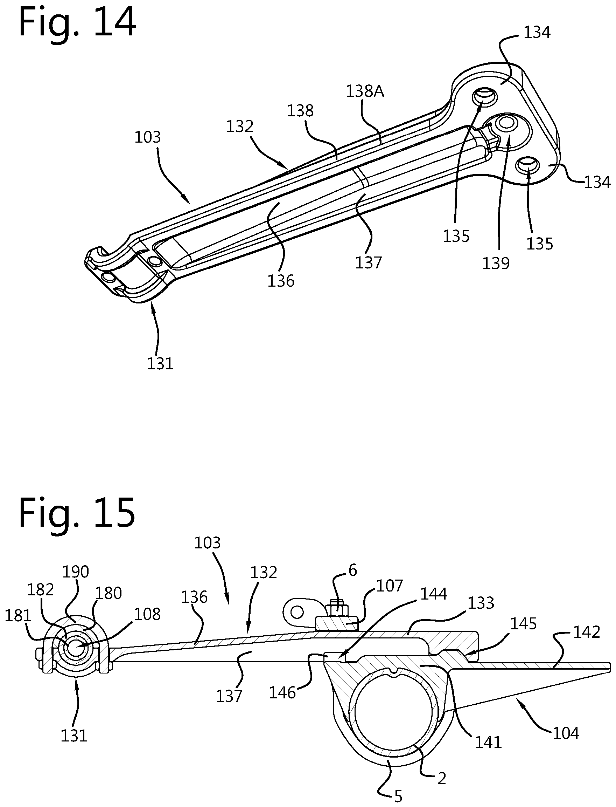

The spring portion 132 has a channel shaped profile that is open at a bottom side, as can be best seen in Figs. 13 and 14 and in the cross section of Fig. 15. The channel shaped profile has a top wall 136 and lateral walls 137. In general, the channel shaped profile has a U-shaped cross section.

The lateral walls 137 have a proximal end that is connected to the top wall 136. Furthermore, the lateral walls 137 have a distal end at the open side of the channel profile. Thickened portions are formed at the distal end of the lateral walls 137. The thickened portions protrude outwardly with respect to the outer surface of the lateral walls 137 and thereby form lateral ridges 138.

The height of the spring portion 132 increases from the front end portion 131 towards the attachment portion 133. The attachment portion 133 has a channel shaped profile that is open at a bottom side and is an extension of the spring portion 132. The attachment portion 133 has in this example a substantially constant height. At the rear end of the attachment portion 133, a laterally extending ear 134 is formed at each lateral side. The ears 134 have a bore 135 for passing through the shanks of the U-bolts 5.

The rear arm part 104 comprises an axle pad 141 and an air spring support arm 142 integral with the axle pad 141. The axle pad 141 comprises a semi-cylindrical shell 143, which defines an axle seat 147 to receive a longitudinal section of the axle body 2. Furthermore, the axle pad 141 has engagement surfaces 144, 145 on the side of the axle pad 141 facing away from the axle seat 147 to engage corresponding surfaces of the attachment portion 133 of the trailing arm 103.

On the engagement surface 144 a pair of positioning protrusions 146 is formed, which is to be received in the channel space of the attachment portion 133 of the trailing arm 103. The protrusions 146 engage the inner side of the lateral walls of the channel shaped attachment portion 133. The positioning protrusions 146 results in that the axle pad 104 and the trailing arm 3 interlock in the transversal direction of the trailing arm 103.

The engagement surface 145 is formed as a conical surface of a truncated cone formed on an upper side of the axle pad 141. At a rear end of the attachment portion 133 of the trailing arm 103, a conical recess 139 is formed in the underside of the attachment portion 133. The truncated cone, having the engagement surface 145, is received in the conical recess 139 when the axle pad is positioned against the attachment portion 133 of the trailing arm 103, as is best visible in Fig. 15. The truncated cone and the recess 139 form another interlocking feature between the trailing arm and the axle pad 141, which interlocks them in the longitudinal and lateral direction of the trailing arm 103.

The air spring support arm 142 is monolithical with the axle pad 41. The air spring support arm 142 in this embodiment has a sort of channel profile shape having a height decreasing from the axle pad 141 towards the rear.

The rear arm part 104 may be formed by forging or casting.

The trailing arm assembly 101 can be attached to the axle body 2 by arranging the axle pad 141 with the engagement surfaces 144, 145 against the engagement surfaces of the attachment portion 133 of the trailing arm 103 and by positioning the axle body 2 in the axle seat 147 provided by the axle pad 141. The U-bolts 5 are arranged around the axle body 2 and the front shanks 51A of each of the U-bolts 5 extend along one of the lateral sides of the attachment portion 133 of the trailing arm 103.

A strap plate 107 is arranged on the attachment portion 133 of the trailing arm 103 and rests at least on the lateral ridges 138A of the attachment portion 133. The front shanks 51A extend through the bores in the strap plate 107. The rear shanks 51B extend through the bores 135 in the ears 134. Nuts 6 are screwed on the shanks 51A, 51B. By tightening the nuts 6 the shanks 51A, 51B are tensioned, whereby the attachment portion 133 of the trailing arm 103, the axle pad 141 and the axle body 2 are clamped together to form a rigid unit. In this embodiment, the clamping means of the trailing arm assembly 101 are thus constituted by the U-bolts 5, the corresponding nuts 6 and the strap plates 107.

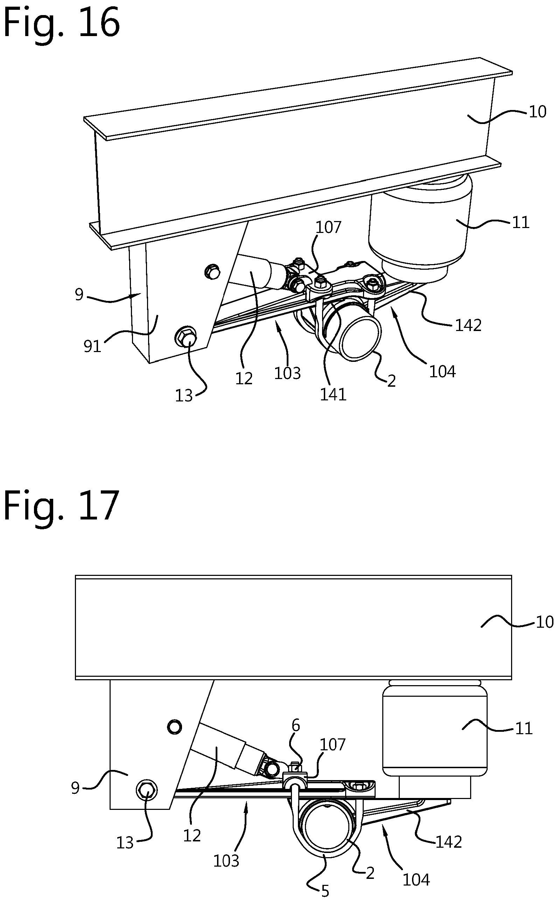

The trailing arm assembly 101, which is attached to the axle body 2, can be mounted to a vehicle chassis as is shown in Figs. 16 and 17 to form an air sprung wheel axle suspension of the vehicle, which vehicle typically is a semi-trailer, a trailer or a truck. As the skilled person will understand there are two suspension units as shown in Figs. 16 and 17 attached to each axle body 2, one at each lateral side of the chassis.

The air-sprung wheel axle suspension comprises thus on either lateral side of the vehicle chassis a bearing bracket 9 which is attached to an overhead chassis beam 10. The front end portion 131 is arranged between lateral plates 91 of the bearing bracket 9 such that the ends of the inner metal bushing of the silentblock 108 engage the inner side of the lateral plates 91. A pivot bolt 13 is inserted through a bore in the lateral plates 91 and through the bushing (silentblock) 108 mounted to the front end portion 131 of the trailing arm 103 by the U-bolt 190. By tightening the pivot bolt 13 by means of a corresponding nut (not shown), a pivoting connection between the bearing bracket 9 and the front end portion 131 of the trailing arm 103 is established.

An air spring 11 is positioned between the chassis and the trailing arm assembly 101. The air spring 11 has a lower end which is is attached to the air spring support arm 142. An upper end of the air spring 11 supports the chassis, wherein the upper end of the air spring 11 may be attached to the chassis beam 10.

In the embodiment shown in Figs. 16 and 17 the suspension furthermore comprises a shock absorber 12, which is pivotally connected to the bearing bracket 9 and with an opposite end pivotally connected to the strap plate 107, which strap plate 107 has two mounting ears 173 for connecting the shock absorber 12.

It is noted that, although the embodiments described in the above have eyelets or eyelet-like constructions at the front end portion of the trailing arm 3, 103, it is within the scope of the claimed invention to provide other pivoting structures to connect the front end portion pivotally to the bearing bracket. The front end portion may for example be formed having journaling pins, which provide the front end portion with a sort of hammerhead shape. These journaling pins can be received in corresponding recesses in the bearing bracket. Such a pivoting structure is disclosed in WO 2020/060393 A1.

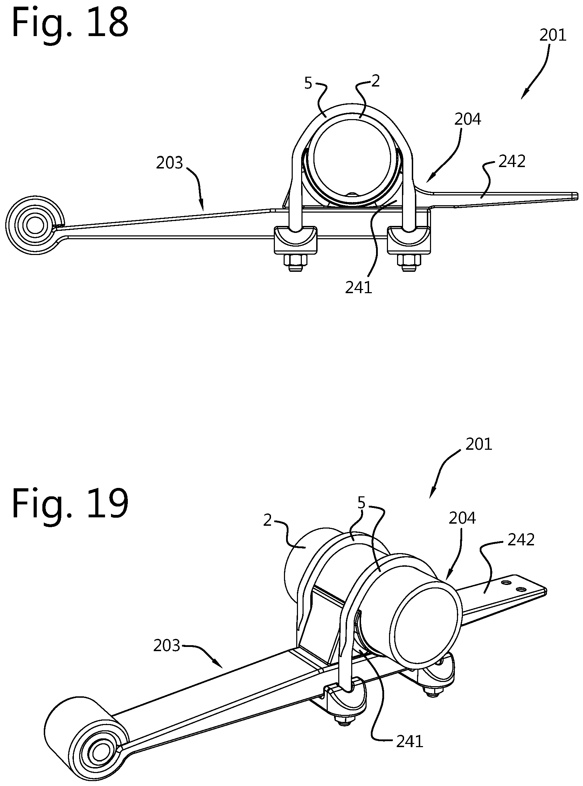

In Figs. 18 and 19 is shown a trailing arm assembly 201 of the so-called "underslung" type, i.e. the trailing arm 203 and axle pad 241 are arranged underneath the axle body 2. Such an embodiment is also encompassed to be within the scope of the claimed invention.

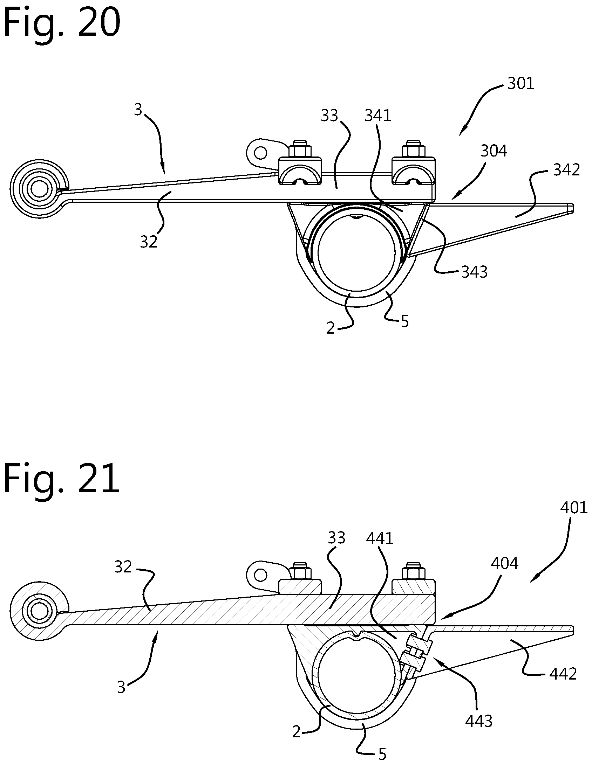

In the embodiments shown in Figs. 1-18, the rear arm part is formed in one piece, e.g. by forging or casting. It is however also conceivable that the rear arm part is assembled from an initially separately formed axle pad and air spring support arm. The axle pad and air spring support arm can be joined by a permanent or non-permanent joint to form the integral rear arm part. In Figs. 20 and 21 two examples are shown.

In Fig. 20 is shown a trailing arm assembly 301 in which the axle pad 341 and the air spring support arm 342 are formed initially as separate parts, e.g. by forging or casting, and wherein the axle pad 341 and the air spring support arm 342 are attached to each other by a welded joint 343 to form the integral rear arm part 304. The rest of the parts of the trailing arm assembly 301 may be the same as in the embodiment of Fig. 1 for example, so referral is made to the description of the embodiment of Fig. 1 for the other parts.

In Fig. 21 is shown a trailing arm assembly 401 in which the axle pad 441 and the air spring support arm 442 are formed initially as separate parts, e.g. by forging or casting, and wherein the axle pad 441 and the air spring support arm 442 are attached to each other by a mechanical joint, in this example by a bolted connection 443, to form the integral rear arm part 404. Again, the rest of the parts of the trailing arm assembly 401 may be the same as in the embodiment of Fig. 1 for example, so referral is made to the description of the embodiment of Fig. 1 for the other parts.

In the embodiments of Figs. 20 and 21 the axle pad 341, 441 and the air spring support arm 342, 442 constitute an integral rear arm part 304, 404 which is handled as an integral part during mounting of the trailing arm assembly 301, 401 on the axle body 2.

Summarizing, the invention proposes a trailing arm assembly 1, 101, 201, 301, 401 having a two-part arm having a front arm part 3, 103, 203 and a rear arm part 4, 104, 204, 304, 404. The front arm part 3, 103, 203 is a flexible trailing arm made of spring steel. The rear arm part 4, 104, 204, 304, 404 integrates the function of an axle pad 41, 141, 241 and an air spring support arm in one integral part. The axle pad 41, 141, 241, 341, 441 is adapted to be clamped between an attachment portion 33, 133, 233 of the trailing arm 3, 103, 203 and an axle body 2 by suitable clamping means comprising for example U-bolts 5 or other tensioning bolts. The air spring support arm 42, 142, 242, 342, 442 is connected to a rear end of the axle pad 41, 141, 241, 341, 441 and extends rearwardly from the axle pad 41, 141, 241, 341, 441. The rear arm part 4, 104, 204 is preferably formed in one piece, e.g. by forging or casting. However, rear arm parts 304, 404, which are initially formed in two or more pieces, and joined by welding or bolting, or another suitable permanent or non-permanent joint are conceivable.

The front arm part 3, 103, 203 and the rear arm part 4, 104, 204, 304, 404 may thus be made in different manufacturing processes. The front arm part 3, 103, 203 may be made in larger amounts as a universal part of the trailing arm assembly. It is envisaged that a range of different rear arm parts 4, 104, 204, 304, 404 may be combined with the universal front arm part 3, 103, 203. The different embodiments within the range of rear arm parts may be for example be adapted for different axle body diameters and/or different air spring positions on the vehicle chassis, which requires for example a different arm length of the air spring support arm 42, 142, 242, 342, 442 or even another shape. In the trailing arm assemblies 301 and especially 401, there may even be a possibility to combine air spring support arms 342 and 442 having different lengths with the same axle pad 341, 441.

## Claims

1. Trailing arm assembly (1, 101, 201, 301, 401) for an air sprung wheel axle suspension, comprising
- a trailing arm (3, 103, 203) having a front end portion (31, 131) adapted to be pivotally arranged in a bearing bracket (9) of a vehicle chassis, an attachment portion (33, 133) adapted to attach an axle body (2) to the trailing arm (3, 103), and a spring portion (32, 132) between the front end portion (31, 131) and the attachment portion (33, 133),
- an axle pad (41, 141, 241, 341, 441) adapted to be arranged between the attachment portion (33, 133) of the trailing arm (3, 103, 203) and the axle body (2), the axle pad (41, 141, 241, 341, 441) defining an axle seat to receive a longitudinal portion of the axle body (2),
- clamping means (5, 6, 7) adapted to engage the axle body (2) and to engage the trailing arm (3, 103) so as to clamp the axle body (2), the axle pad (41, 141, 241, 341, 441) and the attachment portion (33, 133) of the trailing arm (3, 103) together,
- an air spring support arm (42, 142, 242, 342, 442) for attaching an air spring (11), which air spring (11) is located between the support arm (42, 142, 242, 342, 442) and the chassis,
**characterized in that** the axle pad (41, 141,241, 341, 441) and the air spring support arm (42, 142, 242, 342, 442) form an integral rear arm part (4, 104, 204, 304, 404).

2. Trailing arm assembly according to claim 1, wherein the integral rear arm part (4, 104), constituted by the axle pad (41, 141) and the air spring support arm (42, 142), is formed in one piece.

3. Trailing arm assembly according to claim 2, wherein the integral rear arm part (4, 104) is a forged part.

4. Trailing arm assembly according to claim 2, wherein the integral rear arm part (4, 104) is a cast part.

5. Trailing arm assembly according to claim 1, wherein the axle pad (341, 441) and the air spring support arm (342, 442) are separately formed parts joined together by a permanent joint.

6. Trailing arm assembly according to claim 5, wherein the permanent joint is formed by welding or by riveting.

7. Trailing arm assembly according to claim 1, wherein the axle pad (441) and the air spring support arm (442) are separately formed parts joined together by one or more mechanical fasteners (443) such as bolts or screws.

8. Trailing arm assembly according to any of the preceding claims, wherein the trailing arm (103) is a forged part.

9. Trailing arm assembly according to any of the claims 1-7, wherein the trailing arm (3) is at least partially a rolled part.

10. Trailing arm assembly according to any of the preceding claims, wherein the attachment portion (33, 133) of the trailing arm (3, 103) and the axle pad (41, 141) have interlocking means (47, 139, 145, 146) so as to interlock the trailing arm (3, 103) and the axle pad (41, 141) in a plane defined by a longitudinal direction and a transverse direction of the trailing arm (3, 103).

11. Trailing arm assembly according to any of the preceding claims, wherein the clamping means comprise tensioning bolts, preferably U-bolts (5).

12. Trailing arm assembly according to claim 11, wherein the tensioning means furthermore comprise at least one strap plate (7, 7A, 7B) which engages the attachment portion (33, 133) of the trailing arm (3, 103) at a side opposite the axle pad (41, 141), and which has bores (72, 172) for passing through bolt shanks (51, 51A, 51B) of the tensioning bolts (5).

13. Trailing arm assembly according to claim 11 or 12, wherein the attachment portion (33, 133) of the trailing arm (3, 103) has a pair of ears (34, 134), each ear (34, 134) extending laterally from the trailing arm (3, 103) and having a bore (135) for passing through a bolt shank (51, 51A, 51B) of the tensioning bolt (5).

14. Air sprung wheel axle suspension for a heavy vehicle such as a truck, a trailer or a semi-trailer, comprising a pair of trailing arm assemblies (1, 101, 201, 301, 401) according to any of the preceding claims, and furthermore comprising a pair of bearing brackets (9) attached to the vehicle chassis (10), and an air spring (11) supporting the vehicle chassis at a distance rearwardly from the bearing bracket (9), wherein the front end portion (31, 131) of the trailing arm (3, 103) is pivotally attached to the bearing bracket (9) and wherein the air spring support arm (42, 142, 242, 342, 442) is attached to a lower end of the air spring (11).

15. Vehicle comprising an air spring wheel axle suspension according to claim 14.

## Patentansprüche

1. Längslenkerbaugruppe (1, 101, 201, 301, 401) für eine luftgefederte Radachsenaufhängung, umfassend
- einen Längslenker (3, 103, 203) mit einem vorderen Endabschnitt (31, 131), der dazu eingerichtet ist, schwenkbar in einem Lagerbügel (9) eines Fahrzeugchassis angeordnet zu sein, einem Befestigungsabschnitt (33, 133), der dazu eingerichtet ist, einen Achsenkörper (2) am Längslenker (3, 103) zu befestigen, und einem Federabschnitt (32, 132) zwischen dem vorderen Endabschnitt (31, 131) und dem Befestigungsabschnitt (33, 133),
- eine Achsenauflage (41, 141, 241, 341, 441), die dazu eingerichtet ist, zwischen dem Befestigungsabschnitt (33, 133) des Längslenkers (3, 103, 203) und dem Achsenkörper (2) angeordnet zu sein, wobei die Achsenauflage (41, 141, 241, 341, 441) einen Achsensitz zur Aufnahme eines Längsabschnitts des Achsenkörpers (2) definiert,
- eine Einspanneinrichtung (5, 6, 7), die dazu eingerichtet ist, in den Achsenkörper (2) einzugreifen und in den Längslenker (3, 103) einzugreifen, um den Achsenkörper (2), die Achsenauflage (41, 141, 241, 341, 441) und den Befestigungsabschnitt (33, 133) des Längslenkers (3, 103) zusammenzuspannen,
- einen Luftfederstützarm (42, 142, 242, 342, 442) zum Befestigen einer Luftfeder (11), wobei die Luftfeder (11) zwischen dem Stützarm (42, 142, 242, 342, 442) und dem Chassis angeordnet ist,
**dadurch gekennzeichnet, dass** die Achsenauflage (41, 141, 241, 341, 441) und der Luftfederstützarm (42, 142, 242, 342, 442) einen integrierten hinteren Armteil (4, 104, 204, 304, 404) ausbilden.

2. Längslenkerbaugruppe nach Anspruch 1, wobei der integrierte hintere Armteil (4, 104), der durch die Achsenauflage (41, 141) und den Luftfederstützarm (42, 142) geformt wird, einstückig ausgebildet ist.

3. Längslenkerbaugruppe nach Anspruch 2, wobei der integrale hintere Armteil (4, 104) ein Schmiedeteil ist.

4. Längslenkerbaugruppe nach Anspruch 2, wobei der integrale hintere Armteil (4, 104) ein Gussteil ist.

5. Längslenkerbaugruppe nach Anspruch 1, wobei die Achsenauflage (341, 441) und der Luftfederstützarm (342, 442) separat ausgebildete Teile sind, die durch eine unlösbare Verbindung miteinander verbunden sind.

6. Längslenkerbaugruppe nach Anspruch 5, wobei die unlösbare Verbindung durch Schweißen oder Nieten ausgebildet ist.

7. Längslenkerbaugruppe nach Anspruch 1, wobei die Achsenauflage (441) und der Luftfederstützarm (442) separat ausgebildete Teile sind, die durch ein oder mehrere mechanische Befestigungselemente (443) wie Bolzen oder Schrauben miteinander verbunden sind.

8. Längslenkerbaugruppe nach einem der vorstehenden Ansprüche, wobei der Längslenker (103) ein Schmiedeteil ist.

9. Längslenkerbaugruppe nach einem der Ansprüche 1-7, wobei der Längslenker (3) zumindest teilweise ein Walzteil ist.

10. Längslenkerbaugruppe nach einem der vorstehenden Ansprüche, wobei der Befestigungsabschnitt (33, 133) des Längslenkers (3, 103) und die Achsenauflage (41, 141) Formschlussverbindungsmittel (47, 139, 145, 146) aufweisen, um den Längslenker (3, 103) und die Achsenauflage (41, 141) in einer durch eine Längsrichtung und eine Querrichtung des Längslenkers (3, 103) definierten Ebene formschlüssig zu verbinden.

11. Längslenkerbaugruppe nach einem der vorstehenden Ansprüche, wobei die Einspanneinrichtungen Spannbolzen, vorzugsweise U-Bolzen (5), umfassen.

12. Längslenkerbaugruppe nach Anspruch 11, wobei die Spanneinrichtung ferner mindestens eine Kopplungsplatte (7, 7A, 7B) umfasst, die in den Befestigungsabschnitt (33, 133) des Längslenkers (3, 103) auf einer der Achsenauflage (41, 141) entgegengesetzten Seite eingreift, und Bohrungen (72, 172) aufweist, um Bolzenschäfte (51, 51A, 51B) der Spannbolzen (5) dort hindurch zu führen.

13. Längslenkerbaugruppe nach Anspruch 11 oder 12, wobei der Befestigungsabschnitt (33, 133) des Längslenkers (3, 103) ein Paar Ohren (34, 134) aufweist, wobei sich jedes Ohr (34, 134) seitlich vom Längslenker (3, 103) erstreckt und eine Bohrung (135) aufweist, um einen Bolzenschaft (51, 51A, 51B) des Spannbolzens (5) dort hindurch zu führen.

14. Luftgefederte Radachsenaufhängung für ein Schwerlastfahrzeug wie einen Lastkraftwagen, einen Anhänger oder einen Sattelauflieger, umfassend ein Paar Längslenkerbaugruppen (1, 101, 201, 301, 401) nach einem der vorstehenden Ansprüche und ferner umfassend ein Paar Lagerbügel (9), die am Fahrzeugchassis (10) befestigt sind, und eine Luftfeder (11), die das Fahrzeugchassis in einer Entfernung hinter dem Lagerbügel (9) abstützt, wobei der vordere Endabschnitt (31, 131) des Längslenkers (3, 103) schwenkbar am Lagerbügel (9) befestigt ist und wobei der Luftfederstützarm (42, 142, 242, 342, 442) am unteren Ende der Luftfeder (11) befestigt ist.

15. Fahrzeug, umfassend eine Luftfederradachsenaufhängung nach Anspruch 14.

## Revendications

1. Ensemble à bras longitudinal (1, 101, 201, 301, 401) pour une suspension d'essieu de roue à ressort pneumatique, comprenant
- un bras longitudinal (3, 103, 203) ayant une partie d'extrémité avant (31, 131) adaptée pour être agencée de façon pivotante dans une patte d'appui (9) d'un châssis de véhicule, une partie d'assemblage (33, 133) adaptée pour assembler un corps d'essieu (2) avec le bras longitudinal (3, 103), et une partie à ressort (32, 132) entre la partie d'extrémité avant (31, 131) et la partie d'assemblage (33, 133),
- un tampon d'essieu (41, 141, 241, 341, 441) adapté pour être agencé entre la partie d'assemblage (33, 133) du bras longitudinal (3, 103, 203) et le corps d'essieu (2), le tampon d'essieu (41, 141, 241, 341, 441) définissant un siège d'essieu pour recevoir une partie longitudinale du corps d'essieu (2),
- des moyens de serrage (5, 6, 7) adapté pour entrer en prise avec le corps d'essieu (2) et pour entrer en prise avec le bras longitudinal (3, 103) afin de serrer le corps d'essieu (2), le tampon d'essieu (41, 141, 241, 341, 441) et la partie d'assemblage (33, 133) du bras longitudinal (3, 103) ensemble,
- un bras de support à ressort pneumatique (42, 142, 242, 342, 442) pour assembler un ressort pneumatique (11), lequel ressort pneumatique (11) est situé entre le bras de support (42, 142, 242, 342, 442) et le châssis,
**caractérisé en ce que** le tampon d'essieu (41, 141, 241, 341, 441) et le bras de support à ressort pneumatique (42, 142, 242, 342, 442) forment une pièce de bras arrière monobloc (4, 104, 204, 304, 404).

2. Ensemble à bras longitudinal selon la revendication 1, dans lequel la pièce de bras arrière monobloc (4, 104), constituée par le tampon d'essieu (41, 141) et le bras de support à ressort pneumatique (42, 142), est de forme monopièce.

3. Ensemble à bras longitudinal selon la revendication 2, dans lequel la pièce de bras arrière monobloc (4, 104) est une pièce forgée.

4. Ensemble à bras longitudinal selon la revendication 2, dans lequel la pièce de bras arrière monobloc (4, 104) est une pièce coulée.

5. Ensemble à bras longitudinal selon la revendication 1, dans lequel le tampon d'essieu (341, 441) et le bras de support à ressort pneumatique (342, 442) sont des pièces formées séparément jointes ensemble par un joint permanent.

6. Ensemble à bras longitudinal selon la revendication 5, dans lequel le joint permanent est formé par soudage ou par rivetage.

7. Ensemble à bras longitudinal selon la revendication 1, dans lequel le tampon d'essieu (441) et le bras de support à ressort pneumatique (442) sont des pièces formées séparément jointes ensemble par un ou plusieurs dispositifs de fixation mécaniques (443) tels que des boulons ou des vis.

8. Ensemble à bras longitudinal selon de quelconque des revendications précédentes, dans lequel le bras longitudinal (103) est une pièce forgée.

9. Ensemble à bras longitudinal selon de quelconques des revendications 1 à 7, dans lequel le bras longitudinal (3) est au moins partiellement une pièce laminée.

10. Ensemble à bras longitudinal selon de quelconque des revendications précédentes, dans lequel la partie d'assemblage (33, 133) du bras longitudinal (3, 103) et le tampon d'essieu (41, 141) ont des moyens de verrouillage (47, 139, 145, 146) afin de verrouiller le bras longitudinal (3, 103) et le tampon d'essieu (41, 141) dans un plan défini par une direction longitudinale et une direction transversale du bras longitudinal (3, 103).

11. Ensemble à bras longitudinal selon de quelconque des revendications précédentes, dans lequel les moyens de serrage comprennent des boulons de tension, de préférence des boulons en U (5).

12. Ensemble à bras longitudinal selon la revendication 11, dans lequel les moyens de tension comprennent en outre au moins une plaquebande (7, 7A, 7B) qui entre en prise avec la partie d'assemblage (33, 133) du bras longitudinal (3, 103) sur un côté opposé au tampon d'essieu (41, 141), et qui a des alésages (72, 172) pour faire passer à travers des tiges de boulon (51, 51A, 51B) des boulons de tension (5).

13. Ensemble à bras longitudinal selon la revendication 11 ou 12, dans lequel la partie d'assemblage (33, 133) du bras longitudinal (3, 103) a une paire d'oreilles (34, 134), chaque oreille (34, 134) s'étendant latéralement depuis le bras longitudinal (3, 103) et ayant un alésage (135) pour faire passer à travers une tige de boulon (51, 51A, 51B) du boulon de tension (5).

14. Suspension d'essieu à roue à ressort pneumatique pour un véhicule lourd tel qu'un camion, une remorque, ou une semi-remorque, comprenant une paire d'ensembles à bras longitudinal (1, 101, 201, 301, 401) selon de quelconque des revendications précédentes, et comprenant en outre une paire d'appuis de palier (9) assemblés avec le châssis de véhicule (10), et un ressort pneumatique (11) supportant le châssis de véhicule à une distance, vers l'arrière, de la patte d'appui (9), dans laquelle la partie d'extrémité avant (31, 131) du bras longitudinal (3, 103) est assemblée de façon pivotante avec la patte d'appui (9) et dans laquelle le bras de support à ressort pneumatique (42, 142, 242, 342, 442) est assemblé avec une extrémité inférieure du ressort pneumatique (11).

15. Véhicule, comprenant une suspension d'essieu de roue à ressort pneumatique selon la revendication 14.
